# DEMANDE DE BREVET EUROPEEN

(11) **EP 1 431 093 A1**
(43) Date de publication de la demande: **23.06.2004**
(21) Numéro de dépôt: 03293251.9
(22) Date de dépôt: 19.12.2003
(51) Int. Cl.: B60J 7/08

(54) **Dispositif de bachage/débachage et véhicule industriel équipé d'un tel dispositif**

(30) Priorité: 20.12.2002 FR 0216417
(71) Demandeur: General Trailers France, 91130 Ris Orangis (FR)
(72) Inventeur: Gressier, Christophe, 59251 Allenes les Marais (FR); Martelliere, Vincent, 62136 Richebourg (FR)
(74) Mandataire: Catherine, Alain

(57) **Abrégé**

L'invention concerne un dispositif de bâchage/débâchage pour un véhicule industriel comportant une carrosserie, le dispositif comprenant une barre d'enroulement (3) constituant un axe d'enroulement et de déroulement pour une bâche (2) attachée à la carrosserie par un premier (21) de deux bords (21, 22) parallèles opposés de cette bâche, et un moyen d'entraînement (4) relié à une des extrémités (31) de la barre et destiné à faire tourner la barre (3) pour enrouler ou dérouler la bâche (2). Le dispositif comprend en outre un mécanisme de guidage (10) destiné à être monté sur la carrosserie du véhicule industriel afin de guider la barre (3) et pour la maintenir le plus près possible de la carrosserie.

## Description

L'invention concerne un dispositif de bâchage/débâchage pour un véhicule industriel comportant une carrosserie, ainsi qu'un véhicule industriel équipé d'un tel dispositif.

Dans le cadre de la présente invention, le terme « véhicule industrie » désigne indifféremment un camion-porteur, une remorque et une semi-remorque. Et le terme « carrosserie » désigne, indifféremment et de manière très générale, la partie d'un véhicule industriel dans laquelle les produits à transporter sont placés. Cette partie peut être constituée aussi bien par une caisse que par un conteneur, dont au moins une de ses faces, qui sont le toit, les parois latérales droite et gauche et la paroi arrière, est constituée par une bâche.

Jusqu'à maintenant, les bâches couvrant la carrosserie d'un véhicule industriel sont enroulées manuellement ou sont tirées vers une extrémité du toit, en accordéon, pour débâcher le véhicule et les bâches fermant les parois latérales du véhicule sont tirées et pliées comme des rideaux pour ouvrir le véhicule sur le côté. Dans un cas comme dans l'autre, lorsque la bâche est ensuite déroulée ou tirée pour fermer la face respective de la carrosserie du véhicule industriel, la bâche doit être attachée et tendue moyennant un certain nombre de sangles ou d'attaches prévus à cet effet. Il s'ensuit que la manipulation de la bâche pour ouvrir et pour refermer la face correspondante de la carrosserie demande une intervention manuelle assez importante. De plus, lorsque la bâche constitue le toit de la carrosserie, il faut d'abord monter sur le véhicule pour pouvoir manipuler la bâche. Eventuellement, l'enroulement et le déroulement de la bâche peuvent être effectués à partir du sol lorsque la bâche est munie d'une barre d'enroulement actionné moyennant une manivelle assez longue et, le cas échéant, d'un engrenage angulaire ou un cardan, qui relie la manivelle à la barre d'enroulement.

Le but de l'invention est de remédier aux inconvénients décrits ci-avant.

Le but de l'invention est atteint par un dispositif de bâchage/débâchage pour la carrosserie d'un véhicule industriel, comprenant une barre d'enroulement constituant un axe d'enroulement et de déroulement pour une bâche attachée à la carrosserie par un premier des deux bords parallèles opposés de cette bâche, la barre étant destinée à être attachée au second des deux bords parallèles opposés de la bâche et se déplacer, dans un sens ou dans l'autre, entre une première position dans laquelle la bâche est enroulée autour de la barre et une deuxième position dans laquelle la bâche est déroulée de la barre. Ce dispositif comprend également un moyen d'entraînement relié à une des extrémités de la barre afin de faire tourner la barre pour enrouler ou dérouler la bâche.

Conformément à l'invention, le dispositif de bâchage/débâchage comprend en outre un mécanisme de guidage destiné à être monté sur la carrosserie du véhicule industriel afin de guider la barre pendant son déplacement de la première à la deuxième position et inversement. De plus, le mécanisme de guidage comporte un moyen pour maintenir la barre le plus près possible de la carrosserie au moins pendant toute la durée de déplacement de la barre jusqu'à la première où la deuxième position, selon le cas. De préférence, le moyen de maintien tient la barre le plus près possible de la carrosserie aussi lorsque la barre est dans la deuxième position.

Le dispositif de l'invention peut être utilisé aussi bien pour enrouler et dérouler une bâche constituant le toit d'une carrosserie d'un véhicule industriel que pour enrouler et dérouler une bâche constituant une paroi latérale droite ou gauche ou une paroi arrière de la carrosserie. Il est également concevable, selon l'invention, que le dispositif est formé et disposé sur la carrosserie du véhicule industriel de manière à pouvoir enrouler et dérouler une bâche couvrant deux faces contiguës, par exemple une face latérale et le toit, de la carrosserie. Lorsque la bâche constitue le toit de la carrosserie, elle est en général enroulée soit du côté gauche vers le côté droit de la carrosserie, soit dans le sens opposé. Un enroulement du côté arrière vers le côté avant n'est pourtant pas exclu. Et lorsque la bâche constitue une face latérale, elle est enroulée du bas vers le haut de la carrosserie, et cela soit à partir du plateau, soit à partir d'un bord supérieur d'une ridelle, selon le type de réalisation du véhicule industriel.

Le dispositif selon l'invention est conçu à la fois pour enrouler et dérouler la bâche, pour la tenir le plus près possible de la carrosserie et, lorsque la bâche est déroulée, pour la tendre, et cela sans la nécessité d'accéder au préalable à la barre d'enroulement ou au bord de la bâche auquel la barre est attachée. Le maintien de la barre le plus près possible de la carrosserie, est important pour essentiellement deux raisons. La première en est que le déplacement de la barre lors du déroulement de la bâche n'est assuré que si la barre peut s'appuyer sur la bâche. Si la bâche ne peut pas s'appuyer sur la bâche parce que cette dernière ne s'appui ni sur la carrosserie, ni sur le matériau à transporter, la bâche est déroulée de façon non ordonnée et la barre ne peut pas avancer.

La seconde raison en est qu'il est pratiquement impossible de tendre la bâche déroulée, si elle n'a pas été déroulée sous une certaine tension. Et cette tension ne peut être obtenue que si la bâche est appuyée sur la carrosserie ou sur le matériau, lorsque celui dépasse de la carrosserie.

A cette fin, le moyen qui permet de maintenir la barre d'enroulement, et par cela aussi la bâche, le plus près possible de la carrosserie, comprend un bras relié, par une première extrémité, à la barre, sans interférer avec la rotation de cette dernière, et par une seconde extrémité, opposée à la première, à des moyens de guidage du mécanisme de guidage de sorte que le bras soit mobile à la fois angulairement et en translation lors du déplacement de la barre d'enroulement.

Le mécanisme de guidage comprend une piste de guidage et un chariot se déplaçant le long de la piste de guidage lors du déplacement de la barre d'enroulement entre la première position et la deuxième position. Le chariot reçoit la seconde extrémité du bras.

Le bras peut être de différents types dont voici, à titre d'exemples non limitatifs, quatre types. Selon le premier type, le bras est constitué par un élément rigide monté pivotant sur le chariot. Afin de pouvoir exercer l'effort nécessaire pour maintenir la barre le plus près possible de la carrosserie, le mécanisme de guidage comprend un ressort agissant sur le bras. Avantageusement, ce ressort est un ressort hélicoïdal monté coaxialement sur un axe de pivotement qui relie la seconde extrémité du bras au chariot et qui est fixé par une de ses extrémités opposées sur le chariot et par l'autre extrémité sur le bras.

Selon le deuxième type, le bras est constitué par un élément rigide monté sur le chariot par une de deux extrémités opposées. A l'autre extrémité, le bras est relié à la barre par un élément élastique ou hydraulique pouvant exercer une force de poussée sur la barre.

Selon le troisième type, le bras est constitué par un élément élastique qui est précontraint pour maintenir la barre d'enroulement le plus près possible de la carrosserie. Cet élément élastique peut être réalisé, par exemple, sous la forme d'un corps allongé courbé en acier à ressorts.

Selon le quatrième type, le bras est constitué par un élément élastique qui tire la barre vers la carrosserie.

Pour contrer les efforts engendrés par les moyens pour maintenir la barre d'enroulement le plus près possible de la carrosserie, le mécanisme de guidage comprend avantageusement une piste de stabilisation sensiblement parallèle à la piste de guidage le long de laquelle le chariot se déplace lors du déplacement de la barre d'enroulement.

Afin de renforcer la capacité du dispositif de bâchage/débâchage selon l'invention de tendre la bâche lorsqu'elle est déroulée de la barre, le dispositif comprend au moins une butée sur laquelle la barre d'enroulement prend appui, lorsque la bâche est déroulée. Cette butée est montée de préférence sur une seconde face de la carrosserie, adjacente dans le sens de déroulement de la bâche, à une première face de la carrosserie sur laquelle la bâche est déroulée. Toutefois, la butée, ou l'ensemble de butées, peut aussi être montée sur la face même sur laquelle la bâche est déroulée, c'est-à-dire à la fin, dans le sens de déroulement de la bâche, de la face ou de la partie de face que la bâche est censée de couvrir. Selon une variante du dispositif de l'invention, la barre d'enroulement est pourvue de sangles destinées à coopérer avec des moyens d'ancrage fixés sur la carrosserie.

Le but de l'invention est également atteint avec un véhicule industriel comportant au moins un dispositif de bâchage/débâchage dont chacun a toutes ou parties des caractéristiques énoncées soit ci-avant soit dans la description qui va suivre, d'un mode de réalisation du dispositif selon l'invention. En effet, alors qu'en général, un véhicule industriel est équipé d'un seul dispositif selon l'invention, il est tout de même concevable qu'un véhicule industriel est équipé de deux ou même trois de ces dispositifs, par exemple un premier dispositif pour enrouler et dérouler une bâche couvrant deux faces adjacentes et un second pour la bâche couvrant une troisième face de la carrosserie.

La description d'un mode de réalisation du dispositif de l'invention est faite ci-après en référence aux dessins dans lesquels :
La figure 1 montre le dispositif de l'invention dans une position dans laquelle la bâche est déroulée de la barre d'enroulement et est tendue,
Les figures 2a, 2b, 2c montrent trois positions différentes de la barre d'enroulement respectivement pendant le déroulement et pendant l'enroulement de la bâche, et
La figure 3 montre schématiquement une variante de réalisation d'un détail de la figure 1.

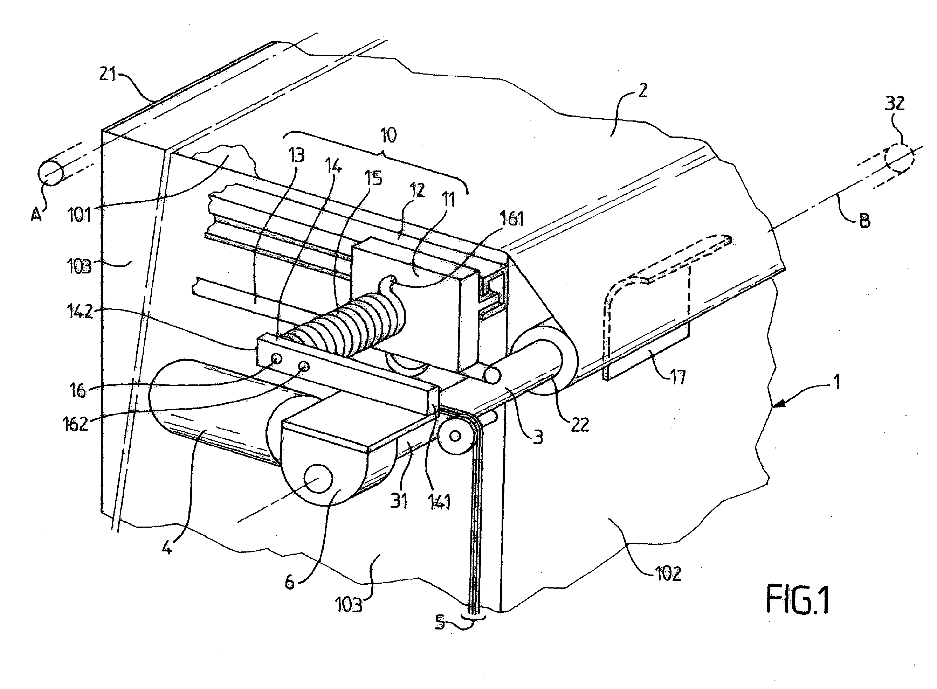

Le dispositif de bâchage/débâchage pour une carrosserie 1 d'un véhicule industriel dont au moins une de ses faces, à savoir le toit, la paroi latérale droite ou gauche ou la paroi arrière, est couverte d'une bâche 2 attachée à la carrosserie par un premier bord 21 de deux bords parallèles opposés, référencés respectivement 21 et 22, comprend une barre d'enroulement 3 constituant un axe d'enroulement et de déroulement pour la bâche 2. Lorsque la barre d'enroulement 3 est installée sur la carrosserie 1, la barre 3 est attachée au second bord 22 des deux bords parallèles opposés de la bâche 2 et se déplace, dans un sens ou dans l'autre, entre une première position A dans laquelle la bâche 2 est enroulée autour de la barre 3 et une deuxième position B dans laquelle la bâche 2 est déroulée de la barre 3. Les positions A et B de la barre 3 sont représentées sur la figure 1 par la position respective de l'axe de rotation de la barre 3. Le déplacement de la barre 3 est obtenu moyennant un moyen d'entraînement 4 qui est avantageusement un moteur électrique alimenté par des câbles 5 et faisant tourner la barre d'enroulement 3 moyennant un réducteur 6. L'ensemble formé par le moteur 4 et le réducteur 6 peut être conçu de manière telle que, en cas d'une panne électrique du véhicule industriel, la barre 3 puisse être tournée moyennant une manivelle ou tout autre moyen approprié manuel. Il est précisé par ailleurs, que le moyen d'entraînement 4 peut également être un moteur hydraulique. De même, l'ensemble moteur 4 / réducteur 6 peut être remplacé par un moyen d'entraînement monobloc électrique, hydraulique ou actionné par air comprimé, par exemple.

Le moyen d'entraînement 4 est attaché à une des deux extrémités 31, 32 de la barre 3 afin de faire tourner la barre 3 pour enrouler et pour dérouler la bâche 2 tout en se déplaçant le long de la face correspondante de la carrosserie. Ainsi, la bâche 2 est enroulée sur elle-même sur la barre 3 lorsque cette dernière tourne dans un sens, et la bâche 2 est déroulée de la barre d'enroulement 3 lorsque la barre tourne dans le sens inverse et roule sur les bords de la carrosserie, qui sont perpendiculaires à la direction de l'axe de rotation de la barre 3 ou sur les produits ou le matériau avec lequel la carrosserie est chargée, lorsque cette charge dépasse le niveau supérieur de la carrosserie.

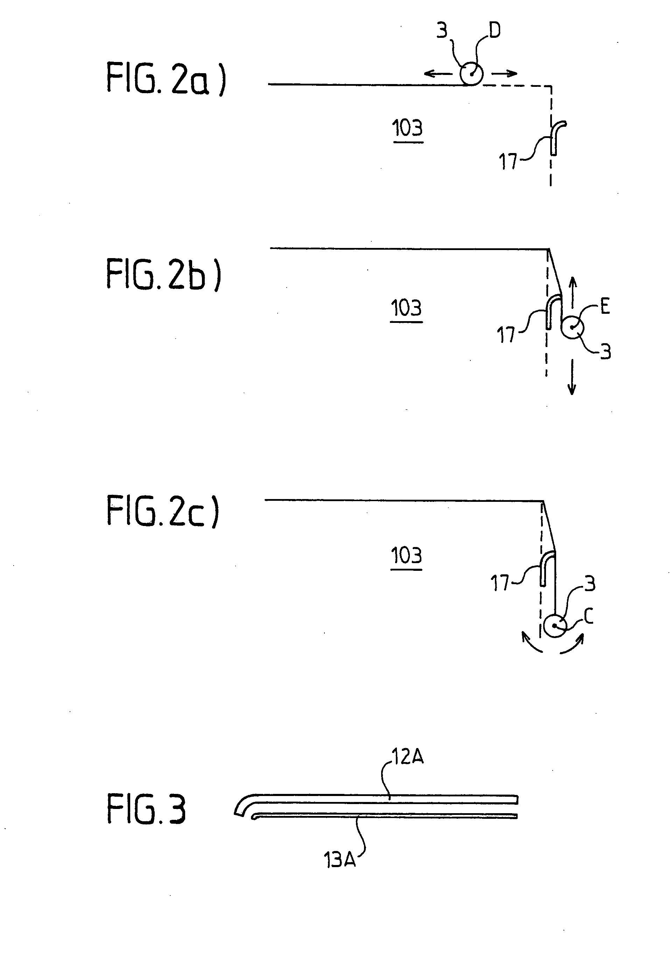

Le dispositif de l'invention comprend également un mécanisme de guidage 10 destiné à guider la barre 3 pendant son déplacement de la position A à la position B et inversement. Le mécanisme de guidage 10 comprend un bras 14 relié, par une première extrémité 141 sur laquelle est fixé le réducteur 6, à la barre 3, sans interférer avec la rotation de cette barre, et par une seconde extrémité 142, opposée à la première extrémité 141, au chariot 11 de sorte que le bras 14 soit mobile à la fois angulairement et en translation lors des déplacements de la barre d'enroulement 3. Outre le chariot 11, le mécanisme de guidage 10 comprend une piste de guidage 12 le long de laquelle le chariot 11 se déplace lors du déplacement de la barre 3 entre la première position A et la deuxième position B, ainsi qu'une piste de stabilisation 13 sur laquelle le chariot 11 prend appui pour contrer les efforts engendrés par les moyens pour maintenir la barre 3 le plus près possible de la carrosserie. Les pistes 12 et 13 sont représentées sur la figure 1 comme des éléments rectilignes, ce est en général suffisant pour le bon fonctionnement du bâchage et débâchage. Cependant, sur certaines carrosseries, il peut s'avérer impossible de libérer la face couverte par la bâche entièrement en utilisant un dispositif de l'invention dont les pistes 12 et 13 sont rectilignes. Dans ce cas, on utilise des pistes 12A et lorsque les 13A représentées schématiquement sur la figure 3. Celles-ci sont courbées du côté de la première position A de la barre 3 afin que le chariot 11 puisse tourner le bras 14, et ainsi la barre 3 le moment venu, sur la paroi adjacente dans le sens de l'enroulement de la bâche.

Selon le mode de réalisation représenté sur la figure 1, le bras 14 est constitué par un élément rigide monté pivotant sur le chariot 11. Pour maintenir la barre d'enroulement 3 toujours le plus près possible de la carrosserie, le mécanisme de guidage 10 comprend un ressort hélicoïdal agissant sur le bras 14. Le ressort hélicoïdal 15 est monté coaxialement sur un axe de pivotement 16 qui relie la seconde extrémité 142 du bras 14 au chariot 11. Le ressort hélicoïdal 15 est fixé par une première extrémité 161 sur le chariot 11 et par une seconde extrémité 162, opposée à la première extrémité 161, sur le bras 14.

Selon un mode de réalisation non représenté sur les dessins, le bras 14, ensemble avec le ressort 15 et l'axe de pivotement 16, peut être remplacé par un bras élastique précontraint d'une manière à engendrer une force de rappel vers la carrosserie.

Le dispositif de l'invention a la double capacité de guider la barre d'enroulement lors de son déplacement et de la maintenir le plus près possible de la carrosserie, d'une part, et de tendre la bâche 2 lorsque la barre d'enroulement 3 a atteint sa deuxième position B. A cet effet, le dispositif selon l'invention comprend, dans le mode de réalisation représenté, mais pas nécessairement, une ou plusieurs butées 17 dont chacune est constituée par un élément monté en saillie sur la carrosserie. Selon le mode de réalisation représenté sur la figure 1, la carrosserie 1 sur laquelle le dispositif selon l'invention est monté, comprend une face 101 couverte par la bâche 2, une paroi latérale gauche 102, une paroi avant 103 sur laquelle est monté le mécanisme de guidage 10, et des parois droite et arrière non représentées. La face 101 peut être le toit d'une structure formée par des montants et des traverses et fixée sur le plateau d'un véhicule industriel ou la partie haute d'un caisson. La bâche 2 étant fixée par son bord 21 du côté de la paroi latérale droite du toit 101, la barre d'enroulement 3 traverse le toit 101 de son bord droit vers son bord gauche lorsque la bâche est déroulée de la barre 3, et la barre d'enroulement 3 traverse le toit dans le sens inverse lorsque la bâche 2 est enroulée sur la barre 3. En conséquence, afin de pouvoir tendre la bâche 2 lorsqu'elle est déroulée, la butée 17, ou l'ensemble des butées 17, est monté sur la paroi latérale gauche 102. Avantageusement, la butée 17 présente une forme partiellement courbée, la partie en courbe de la butée 17 étant orientée vers le haut et vers l'extérieur de la carrosserie.

Puisque le dispositif de bâchage/débâchage selon l'invention peut être utilisé, comme cela a déjà été précisé plus haut, pour l'enroulement et le déroulement d'une bâche sur quelque face de la carrosserie que ce soit, et donc non seulement lorsque la bâche couvre le toit de la carrosserie, la disposition des différents éléments du dispositif selon l'invention peut être décrite de manière générale comme suit : par rapport à une première face 101 de la carrosserie sur laquelle la bâche 2 est déroulée, la butée 17, ou l'ensemble des butées 17, est disposé sur une deuxième face 102 de la carrosserie, adjacente à la première face 101 dans le sens de déroulement de la bâche 2, et le mécanisme de guidage 10 est disposé sur une troisième face 103 de la carrosserie, adjacente à la fois à la première face et à la deuxième face de la carrosserie.

Le fonctionnement du dispositif selon l'invention est représenté de manière très schématisée sur les figures 2a, 2b et 2c. La figure 2a montre la position relative de la barre d'enroulement 3 par rapport à la bâche 2 dans une position intermédiaire D entre la première position A et la deuxième position B. Cette position est la même lors de l'enroulement de la bâche sur la barre d'enroulement 3 et lors du déroulement de la bâche 2 de la barre d'enroulement 3 : la barre d'enroulement 3 roule sur la bâche 2 et, en même temps, enroule ou déroule la bâche, selon le cas ; la bâche se trouve donc entre la barre 3 et la carrosserie. La flèche pointant vers la gauche indique le sens de l'enroulement et la flèche pointant vers la droite indique le sens du déroulement de la bâche.

Lors du déroulement de la bâche 2, la barre d'enroulement 3 continue sa course vers la deuxième position B et la dépasse dans un premier temps, comme cela est représenté sur la figure 2b. La figure 2b représente la barre d'enroulement 3 dans une position intermédiaire E à laquelle elle est arrivée en continuant à rouler sur la bâche 2 vers la droite et ensuite vers le bas, selon la représentation des figures 1 et 2. Lorsque la barre 3 a atteint la position E, la barre 3 a dépassé l'emplacement de la butée 17 du fait que la bâche 2, en étant déroulée de la barre 3, a couvert la butée 17 et a empêché ainsi la barre 3 de se trouver en face de la butée 17.

Lorsque la barre 3 continue à se déplacer vers le bas, c'est-à-dire lorsqu'elle continue à dérouler la bâche 2, la barre 3 avance jusqu'à une troisième position C dans laquelle la bâche 2 est entièrement déroulée de la barre d'enroulement 3. La position C est une position de retour, puisqu'en continuant à tourner dans le même sens que pendant tout le déroulement de la bâche 2, la barre 3 se met maintenant entre la bâche et la carrosserie et commence à enrouler la bâche 2 à l'envers. Cet enroulement particulier se poursuit jusqu'à ce que la barre d'enroulement 3 est arrêtée par la butée 17. Puisque le moteur 4 ne s'arrête pas par le seul fait du contact entre la barre d'enroulement 3 et une ou plusieurs butées 17, mais par exemple par une demande de courant croissante du moteur, la barre d'enroulement 3 cesse de tourner seulement lorsque la bâche 2 est tendue.

Lors du débâchage de la carrosserie, la barre d'enroulement 3 tourne dans le sens inverse par rapport à celui dans lequel elle a tourné lors du bâchage. Ainsi, la barre d'enroulement 3 descend d'abord de la position B vers la position C en déroulant la bâche 2. Ce n'est que lorsque la barre 3 est à la position C qu'elle commence à enrouler la bâche 2 à l'endroit. Lorsque la barre 3 quitte la position C pour atteindre la position E, la barre d'enroulement 3 se met du côté extérieur de la bâche 2 par rapport à la carrosserie et notamment par rapport à la butée 17 qui, maintenant, ne peut plus bloquer le chemin à la barre d'enroulement 3, ce qui permet de continuer l'enroulement de la bâche 2 sur la barre 3 en passant par la position E et ensuite par la position D vers la première position A.

Lorsque le dispositif selon l'invention n'est pas utilisé pour enrouler et dérouler une bâche couvrant un toit, tel que représenté sur les figures 1 et 2, mais lorsque le dispositif est utilisé pour le bâchage et le débâchage d'une paroi latérale, la butée 17 peut être montée sur la face inférieure du plateau ou du plancher sur lequel la carrosserie est montée. En ce cas, la butée 17 est disposée sur une face de la carrosserie qui est adjacente, dans le sens de déroulement de la bâche, à la face de la carrosserie sur laquelle la bâche est déroulée. On retrouve donc une disposition analogue à celle représentée sur la figure 1.

Cependant, il est également possible de monter la butée 17 sur la même face que celle sur laquelle la bâche est déroulée. Une telle disposition est utile, par exemple, lorsque la bâche ne couvre pas une face latérale entière, parce que la partie inférieure de cette face latérale est constituée par une ridelle. Une autre raison pour une telle disposition peut être que la bâche couvre une face latérale de la carrosserie et qu'il n'y a pas assez de place en dessous de celle-ci pour y loger la barre d'enroulement.

## Revendications

1. Dispositif de bâchage/débâchage pour un véhicule industriel comportant une carrosserie, le dispositif comprenant une barre d'enroulement (3) constituant un axe d'enroulement et de déroulement pour une bâche (2) attachée à la carrosserie par un premier (21) de deux bords (21, 22) parallèles opposés de cette bâche, la barre (3) étant destinée à être attachée au second des deux bords parallèles opposés de la bâche et à se déplacer, dans un sens ou dans l'autre, entre une première position (A) dans laquelle la bâche (2) est enroulée autour de la barre (3) et une deuxième position dans laquelle la bâche (2) est déroulée de la barre (3), et un moyen d'entraînement (4) relié à une des extrémités (31) de la barre et destiné à faire tourner la barre (3) pour enrouler ou dérouler la bâche (2),
**caractérisé en ce qu'**il comprend en outre un mécanisme de guidage (10) destiné à être monté sur la carrosserie du véhicule industriel afin de guider la barre (3) pendant son déplacement de la première à la deuxième position et inversement et comportant un moyen (11-15) pour maintenir la barre (3) le plus près possible de la carrosserie au moins pendant toute la durée de déplacement de la barre (3) jusqu'à la première ou la deuxième position, selon le cas.

2. Dispositif selon la revendication 1, **caractérisé en ce que** le moyen de maintien (11-15) comprend un bras (14) relié, par une première extrémité (141), à la barre (3), sans interférer avec la rotation de cette dernière, et par une seconde extrémité (142), opposée à la première (141), à des moyens de guidage (11-13) du mécanisme de guidage de sorte que le bras (14) soit mobile à la fois angulairement et en translation lors du déplacement de la barre d'enroulement (3).

3. Dispositif selon la revendication 1 ou 2, **caractérisé en ce que** le mécanisme de guidage (10) comprend une piste de guidage (12) et un chariot (11) se déplaçant le long de la piste de guidage lors du déplacement de la barre (3) entre les première et deuxième positions, le chariot (11) recevant la seconde extrémité (142) du bras (14).

4. Dispositif selon la revendication 2 ou 3, **caractérisé en ce que** le bras (4) est constitué par un élément rigide monté pivotant sur le chariot (11) et **en ce que** le mécanisme de guidage (10) comprend un ressort (15) agissant sur le bras (14) pour maintenir la barre d'enroulement (3) lors du déplacement de cette dernière le plus près possible de la carrosserie.

5. Dispositif selon la revendication 4, **caractérisé en ce que** le mécanisme de guidage (10) comprend un ressort hélicoïdal (15) monté coaxialement sur un axe de pivotement (16) reliant la seconde extrémité (142) du bras (14) au chariot (11) et fixé par une (161) de ses extrémités opposées (161-162) sur le chariot (11) et par l'autre extrémité (162) sur le bras (14).

6. Dispositif selon la revendication 2 ou 3, **caractérisé en ce que** le bras est constitué par un élément élastique précontraint pour maintenir la barre d'enroulement (3) lors du déplacement de cette dernière le plus près possible de la carrosserie.

7. Dispositif selon l'une quelconque des revendications 1 à 6, **caractérisé en ce que** le mécanisme de guidage (10) comprend une piste de stabilisation (13) sur laquelle le chariot (11) prend appui pour contrer les efforts engendrés par les moyens (11-15) pour maintenir la barre (3) le plus près possible de la carrosserie.

8. Dispositif selon l'une quelconque des revendications précédentes, **caractérisé en ce que** le moyen d'entraînement (4) est un moteur électrique.

9. Dispositif selon l'une quelconque des revendications précédentes, **caractérisé en ce qu'**il comprend au moins une butée (17) destinée à être disposée sur une deuxième face (102) de la carrosserie, adjacente dans le sens de déroulement de la bâche, à une première face (101) de la carrosserie sur laquelle la bâche (2) est déroulée.

10. Véhicule industriel comportant une carrosserie dont une des faces parmi le toit, les deux faces latérales et la face arrière, est fermée par une bâche (2) attachée à la carrosserie par un premier (21) de deux bords parallèles opposés (21, 22) de cette bâche, et un dispositif de bâchage/débâchage pour enrouler et dérouler cette bâche, le dispositif comprenant une barre d'enroulement (3) constituant un axe d'enroulement et de déroulement pour la bâche (2), la barre (3) étant attachée au second (22) des deux bords (21, 22) de la bâche et disposée de manière à se déplacer, dans un sens ou dans l'autre, entre une première position dans laquelle la bâche est enroulée autour de la barre et une deuxième position dans laquelle la bâche est déroulée de la barre, et un moyen d'entraînement (4) relié à une des extrémités (31) de la barre (3) et destiné à faire tourner la barre (3) pour enrouler ou dérouler la bâche(2),
**caractérisé en ce que** le dispositif de bâchage/débâchage comprend en outre un mécanisme de guidage (10) monté sur la carrosserie du véhicule industriel afin de guider la barre (3) pendant son déplacement de la première à la deuxième position et inversement et comportant un moyen (11 à 15) pour maintenir la barre le plus près possible de la carrosserie au moins pendant toute la durée de déplacement de la barre (3) jusqu'à la première ou la deuxième position, selon le cas.

11. Véhicule selon la revendication 10, **caractérisé en ce que** le dispositif de bâchage/débâchage est un dispositif selon l'une quelconque des revendications 1 à 9.
